# EUROPÄISCHE PATENTSCHRIFT

(11) **EP 2 655 934 B1**
(45) Veröffentlichungstag und Bekanntmachung des Hinweises auf die Patenterteilung: **17.12.2014**
(21) Anmeldenummer: 11785416.6
(22) Anmeldetag: 21.11.2011
(51) Int. Cl.: F16H 3/62, F16H 3/66

(54) **MEHRSTUFENGETRIEBE IN PLANETENBAUWEISE**
MULTISTEP GEAR MECHANISM OF PLANETARY DESIGN
BOÎTE DE VITESSES MULTIÉTAGÉE DANS UNE STRUCTURE À TRAINS PLANÉTAIRES

(30) Priorität: 21.12.2010 DE 102010063634
(43) Veröffentlichungstag der Anmeldung: 30.10.2013
(73) Patentinhaber: ZF Friedrichshafen AG, 88038 Friedrichshafen (DE)
(72) Erfinder: GUMPOLTSBERGER, Gerhard, 88048 Friedrichshafen (DE); WAFZIG, Jürgen, 88097 Eriskirch (DE); SIBLA, Christian, 88045 Friedrichshafen (DE); BECK, Stefan, 88097 Eriskirch (DE); WECHS, Michael, 88138 Sigmarszell (DE)
(86) Internationale Anmeldenummer: PCT/EP2011/070521
(87) Internationale Veröffentlichungsnummer: WO 2012/084376

(56) Entgegenhaltungen:
- DE-A1-102006 024 442
- JP-A- 2006 266 389
- US-A1- 2007 072 732

## Beschreibung

Die Erfindung betrifft ein Mehrstufengetriebe in Planetenbauweise, insbesondere für ein Kraftfahrzeug, mit einem Gehäuse, in welchem acht drehbare Wellen und vier Planetensätze aufgenommen sind, und mindestens sechs Schaltelementen, welche durch Bremsen und Kupplungen gebildet sind und mittels deren gezielter Betätigung verschiedene Übersetzungsverhältnisse zwischen einer Antriebs- und einer Abtriebswelle darstellbar sind.

Derartige Mehrstufengetriebe kommen vorzugsweise bei Automatikgetrieben von Kraftfahrzeugen zum Einsatz, wobei der in der jeweiligen Gangstufe wirksame Leistungsfluss innerhalb der Planetensätze durch eine gezielte Betätigung der Schaltelemente definiert wird. Dabei sind die Planetensätze bei einem Automatikgetriebe üblicherweise zudem mit einem einer Schlupfwirkung unterliegenden und wahlweise mit einer Überbrückungskupplung versehenen Anfahrelement verbunden, wie beispielsweise etwa einem hydrodynamischen Drehmomentwandler oder einer Strömungskupplung.

Aus der DE 10 2008 000 428 A1 ist ein Mehrstufengetriebe in Planetenbauweise bekannt, bei welchem in einem Gehäuse vier Planetensätze, sowie insgesamt acht drehbare Wellen angeordnet sind, von denen eine die Antriebswelle und eine andere die Abtriebswelle des Mehrstufengetriebes darstellt. Des Weiteren sind im Bereich der Wellen mindestens sechs Schaltelemente vorgesehen, mittels deren gezielter Betätigung der Leistungsfluss innerhalb der vier Planetensätze variiert und damit verschiedene Übersetzungsverhältnisse zwischen der Antriebs- und der Abtriebswelle definierbar sind. Insgesamt sind hierdurch neun Vorwärtsgänge, sowie ein Rückwärtsgang schaltbar.

Weitere Mehrstufengetriebe sind beispielsweise aus der DE 102006 02 4442 A1 bekannt.

Es ist die Aufgabe der vorliegenden Erfindung, ein Mehrstufengetriebe der eingangs genannten Art vorzuschlagen, mittels welchem mindestens neun Vorwärtsgänge und ein Rückwärtsgang darstellbar sind und bei dem insbesondere die Bauteilanzahl reduziert und damit das Gewichts und der Herstellungsaufwand minimiert sind. Zudem soll sich eine gute Übersetzungsreihe darstellen lassen, sowie Belastungen der einzelnen Getriebeelemente vermindert sein. Schließlich sollen hohe Verzahnungswirkungsgrade erreichbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben dabei jeweils vorteilhafte Weiterbildungen der Erfindung wieder.

Demnach wird ein erfindungsgemäßes Mehrstufengetriebe in Planetenbauweise vorgeschlagen, welches in einem Gehäuse eine Antriebs- und eine Abtriebswelle, sowie weitere sechs drehbare Wellen und vier Planetensätze aufnimmt. Die Planetensätze sind dabei in axialer Richtung betrachtet in der Reihenfolge erster Planetensatz, zweiter Planetensatz, dritter Planetensatz und vierter Planetensatz angeordnet, wobei der erste, dritte und vierte Planetensatz vorzugsweise jeweils als Minus-Planetensatz ausgebildet sind, während der zweite Planetensatz bevorzugt als Plus-Planetensatz gestaltet ist. Es ist jedoch ebenso denkbar, an Stellen, wo es die Bindbarkeit zulässt, einzelne oder mehrere der Minus-Planetenradsätze in Plus-Planetenradsätze umzuwandeln, wenn gleichzeitig eine Steg- und Hohlradanbindung getauscht und der Betrag der Standübersetzung um Eins erhöht wird, bzw. umgekehrt den Plus-Planetensatz als Minus-Planetensatz auszuführen.

Bekanntlich umfasst ein einfacher Minus-Planetensatz ein Sonnenrad, ein Hohlrad und einen Steg, welcher Planetenräder drehbar gelagert trägt, die jeweils mit dem Sonnenrad und dem Hohlrad kämmen. Bei festgesetztem Steg wird dabei eine zum Sonnenrad entgegengesetzte Drehrichtung des Hohlrades erreicht.

Im Gegensatz hierzu umfasst ein einfacher Plus-Planetensatz ein Sonnenrad, ein Hohlrad und einen Steg, welcher innere und äußere Planetenräder drehbar gelagert trägt. Dabei kämmen alle inneren Planetenräder mit dem Sonnenrad und alle äußeren Planetenräder mit dem Hohlrad, wobei zudem jedes innere Planetenrad mit jeweils einem äußeren Planetenrad in Eingriff steht. Bei einem Festsetzen des Steges wird dabei eine gleiche Drehrichtung des Hohlrades gegenüber dem Sonnenrad erreicht.

Gemäß der Erfindung ist ein Steg eines ersten Planetensatzes mit einer dritten Welle verbunden, die über eine erste Bremse am Gehäuse festgesetzt werden kann und des Weiteren zum einen mittels einer ersten Kupplung mit einer vierten Welle lösbar verbindbar ist, welche mit einem Steg eines zweiten Planetensatzes gekoppelt ist, und zum anderen über eine zweite Kupplung mit der Antriebswelle verbunden werden kann. Ferner ist ein Hohlrad eines dritten Planetensatzes mit einer fünften Welle gekoppelt, welche über eine zweite Bremse am Gehäuse festgesetzt werden kann. Des Weiteren ist die Antriebswelle zudem mit einem Sonnenrad des zweiten Planetensatzes gekoppelt und ein Hohlrad des zweiten Planetensatzes mit einer sechste Welle verbunden.

Entsprechend einer Ausführungsform der Erfindung verbindet die vierte Welle des Weiteren ein Sonnenrad des dritten Planetensatzes mit einem Sonnenrad eines vierten Planetensatzes. Zudem ist die sechste Welle mit einem Hohlrad des ersten Planetensatzes verbunden und die Antriebswelle ferner über eine dritte Kupplung mit einer siebten Welle koppelbar, die mit einem Steg des vierten Planetensatzes verbunden ist. Ferner verbindet die Abtriebswelle ein Hohlrad des vierten Planetensatzes mit einem Steg des dritten Planetensatzes, während ein Sonnenrad des ersten Planetensatzes mit einer achten Welle gekoppelt ist, welche mittels einer dritten Bremse am Gehäuse festgesetzt werden kann.

Gemäß einer alternativen Ausführung der Erfindung verbindet die vierte Welle des Weiteren ein Sonnenrad des dritten Planetensatzes mit einem Sonnenrad eines vierten Planetensatzes, wobei die sechste Welle zudem mit einem Hohlrad des ersten Planetensatzes verbunden und die Antriebswelle ferner mit einem Steg des vierten Planetensatzes gekoppelt ist. Des Weiteren ist die Abtriebswelle mit einem Steg des dritten Planetensatzes wirkverbunden und kann mittels einer dritten Kupplung mit einer siebten Welle lösbar verbunden werden, welche mit einem Hohlrad des vierten Planetensatzes gekoppelt ist. Schließlich ist ein Sonnenrad des ersten Planetensatzes mit einer achten Welle gekoppelt, welche mittels einer dritten Bremse am Gehäuse festgesetzt werden kann.

Erfindungsgemäß ist die vierte Welle entsprechend einer weiteren Ausführungsform der Erfindung zudem mit einem Sonnenrad des dritten Planetensatzes gekoppelt und kann mittels einer dritten Kupplung mit einer siebten Welle verbunden werden, die mit einem Sonnenrad eines vierten Planetensatzes gekoppelt ist. Ferner ist die sechste Welle mit einem Hohlrad des ersten Planetensatzes verbunden und die Antriebswelle mit einem Steg des vierten Planetensatzes gekoppelt, dessen Hohlrad über die Abtriebswelle mit einem Steg des dritten Planetensatzes verbunden ist. Schließlich ist ein Sonnenrad des ersten Planetensatzes mit einer achten Welle gekoppelt, welche mittels einer dritten Bremse am Gehäuse festgesetzt werden kann.

In den Fällen dieser Ausführungsformen ergibt sich ein erster Vorwärtsgang durch Schließen der zweiten und dritten Bremse, sowie der ersten Kupplung, wohingegen ein zweiter Vorwärtsgang durch Betätigen der zweiten Bremse, sowie der ersten und zweiten Kupplung geschaltet wird. Zudem ist ein dritter Vorwärtsgang durch Schließen der zweiten und dritten Bremse, sowie der zweiten Kupplung wählbar. Des Weiteren ergibt sich ein vierter Vorwärtsgang durch Betätigen der zweiten Bremse, sowie der zweiten und dritten Kupplung, ein fünfter Vorwärtsgang durch Schließen der dritten Bremse, sowie der zweiten und dritten Kupplung. Ein sechster Vorwärtsgang wird durch Betätigen sämtlicher Kupplungen geschaltet, ein siebter Vorwärtsgang ist durch Schließen der dritten Bremse, sowie der ersten und dritten Kupplung wählbar. Ferner ergibt sich ein achter Vorwärtsgang durch Betätigen der ersten Bremse, sowie der ersten und dritten Kupplung, wohingegen ein neunter Vorwärtsgang durch Schließen der ersten und dritten Bremse, sowie der dritten Kupplung geschaltet wird. Schließlich ergibt sich ein Rückwärtsgang durch Schließen sämtlicher Bremsen.

Entsprechend einer alternativen Ausführungsform der Erfindung verbindet die vierte Welle zudem ein Sonnenrad des dritten Planetensatzes mit einem Sonnenrad eines vierten Planetensatzes, wobei die Antriebswelle über eine dritte Kupplung mit einer siebten Welle gekoppelt werden kann, die mit einem Steg des vierten Planetensatzes verbunden ist. Ferner ist ein Hohlrad des ersten Planetensatzes mit einer achten Welle gekoppelt, die mittels einer vierten Kupplung mit der sechsten Welle verbunden werden kann. Schließlich verbindet die Abtriebswelle ein Hohlrad des vierten Planetensatzes mit einem Steg des dritten Planetensatzes und ein Sonnenrad des ersten Planetensatzes ist drehfest mit dem Gehäuse gekoppelt.

Gemäß einer weiteren Ausgestaltung der Erfindung verbindet die vierte Welle zudem ein Sonnenrad des dritten Planetensatzes mit einem Sonnenrad eines vierten Planetensatzes, während die Abtriebswelle mit einem Steg des dritten Planetensatzes gekoppelt ist und mittels einer dritten Kupplung mit einer siebten Welle lösbar verbunden werden kann, die mit einem Hohlrad des vierten Planetensatzes gekoppelt ist. Ferner ist ein Hohlrad des ersten Planetensatzes mit einer achten Welle verbunden ist, welche über ein vierte Kupplung mit der sechsten Welle gekoppelt werden kann. Schließlich ist die Antriebswelle mit einem Steg des vierten Planetensatzes gekoppelt und ein Sonnenrad des ersten Planetensatzes drehfest mit dem Gehäuse verbunden.

Entsprechend einer weiteren Ausführungsform ist die vierte Welle des Weiteren mit einem Sonnenrad des dritten Planetensatzes gekoppelt und kann mittels einer dritten Kupplung mit einer siebten Welle verbunden werden, die mit einem Sonnenrad eines vierten Planetensatzes gekoppelt ist. Ein Hohlrad des ersten Planetensatzes ist mit einer achten Welle verbunden, welche über eine vierte Kupplung mit der sechsten Welle verbindbar ist. Zudem koppelt die Abtriebswelle ein Hohlrad des vierten Planetensatzes mit einem Steg des dritten Planetensatzes. Schließlich ist die Antriebswelle mit einem Steg des vierten Planetensatzes verbunden und ein Sonnenrad des ersten Planetensatzes drehfest mit dem Gehäuse gekoppelt.

In den Fällen dieser Ausgestaltungen der Erfindung ergibt sich ein erster Vorwärtsgang durch Schließen der zweiten Bremse, sowie der ersten und vierten Kupplung, wohingegen ein zweiter Vorwärtsgang durch Betätigen der zweiten Bremse, sowie der ersten und zweiten Kupplung geschaltet wird. Zudem ist ein dritter Vorwärtsgang durch Schließen der zweiten Bremse, sowie der zweiten und vierten Kupplung wählbar. Des Weiteren ergibt sich ein vierter Vorwärtsgang durch Betätigen der zweiten Bremse, sowie der zweiten und dritten Kupplung, ein fünfter Vorwärtsgang durch Schließen der zweiten, dritten und vierten Kupplung. Ein sechster Vorwärtsgang wird durch Betätigen der ersten, zweiten und dritten Kupplung geschaltet, während ein siebter Vorwärtsgang durch Schließen der ersten, dritten und vierten Kupplung wählbar ist. Ferner ergibt sich ein achter Vorwärtsgang durch Betätigen der ersten Bremse, sowie der ersten und dritten Kupplung, wohingegen ein neunter Vorwärtsgang durch Schließen der ersten Bremse, sowie der dritten und vierten Kupplung geschaltet wird. Schließlich ergibt sich ein Rückwärtsgang durch Schließen sämtlicher Bremsen und der vierten Kupplung.

In Weiterbildung der Erfindung sind die Schaltelemente als Lamellen- oder als Klauenschaltelemente ausgestaltet. Vorteilhafterweise können hierdurch die Schaltelemente platzsparend und robust realisiert werden.

Mittels der erfindungsgemäßen Ausgestaltung eines Mehrstufengetriebes ist es möglich, die insgesamt zehn wählbaren Gänge mit einer niedrigen Anzahl an Bauteilen zu realisieren und somit den Herstellungsaufwand und das Gewicht gering zu halten. Zudem ergeben sich insbesondere für Personenkraftwagen geeignete Übersetzungen und eine erhöhte Gesamtspreizung des Mehrstufengetriebes, was zu einer Steigerung des Fahrkomforts und einer Absenkung des Kraftstoffverbrauchs führt.

Ferner zeichnet sich ein erfindungsgemäßes Mehrstufengetriebe durch niedrige Absolut- und Relativdrehzahlen, sowie niedrige Planetensatz- und Schaltelementmomente aus, was sich auf deren Dimensionierung und ihre Lebensdauer positiv auswirkt. Insgesamt lassen sich zudem eine gute, insbesondere leicht progressive Übersetzungsreihe, und gute Verzahnungswirkungsgrade erreichen.

Weitere, die Erfindung verbessernde Maßnahmen werden nachstehend gemeinsam mit der Beschreibung bevorzugter Ausführungsformen der Erfindung näher dargestellt. Es zeigt:
- Fig. 1: eine schematische Ansicht einer ersten bevorzugten Ausführungsform eines erfindungsgemäßen Mehrstufengetriebes;
- Fig. 2: ein beispielhaftes Schaltschema für ein Mehrstufengetriebe gemäß Fig. 1;
- Fig. 3: eine schematische Ansicht einer zweiten bevorzugten Ausführungsform eines erfindungsgemäßen Mehrstufengetriebes;
- Fig. 4: eine schematische Ansicht einer dritten bevorzugten Ausführungsform eines erfindungsgemäßen Mehrstufengetriebes;
- Fig. 5: eine schematische Ansicht einer vierten bevorzugten Ausführungsform eines erfindungsgemäßen Mehrstufengetriebes;
- Fig. 6: eine schematische Ansicht einer weiteren, fünften bevorzugten Ausführungsform eines erfindungsgemäßen Mehrstufengetriebes; und
- Fig. 7: eine schematische Ansicht einer sechsten bevorzugten Ausführungsform eines erfindungsgemäßen Mehrstufengetriebes.

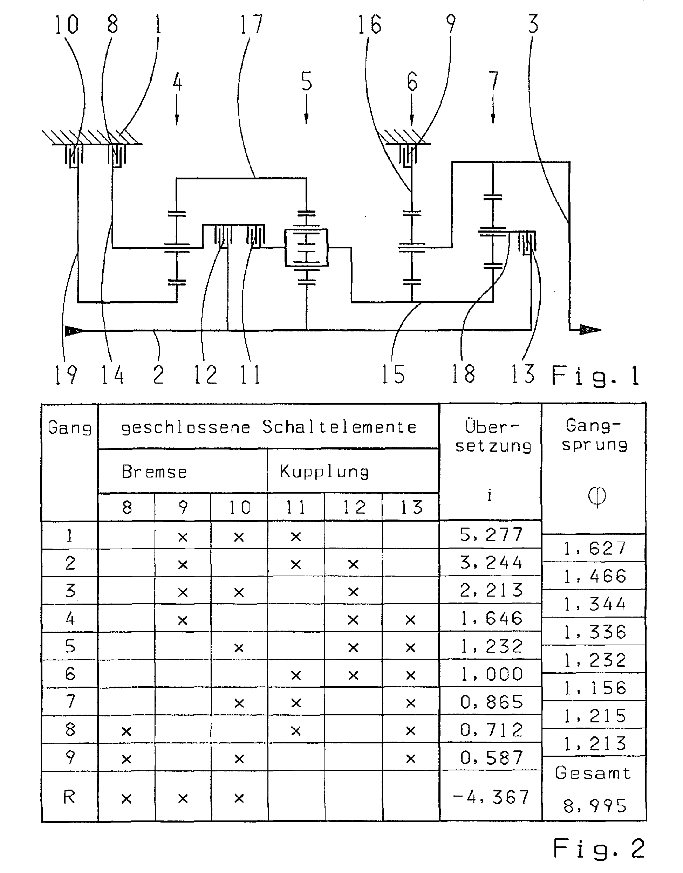

Aus Fig. 1 ist eine erste bevorzugte Ausführungsform eines erfindungsgemäßen Mehrstufengetriebes ersichtlich, welches in einem Gehäuse 1 eine Antriebswelle 2, eine Abtriebswelle 3, sowie vier Planetensätze 4, 5, 6 und 7 aufnimmt. Hierbei sind der erste Planetensatz 4, der dritte Planetensatz 6 und der vierte Planetensatz 7 jeweils als Minus-Planetensätze ausgebildet, während der zweite Planetensatz 5 als Plus-Planetensatz ausgestaltet ist. Erfindungsgemäß können jedoch die Minus-Planetensätze ebenso gut im Einzelnen jeweils als Plus-Planetensatz ausgeführt sein, wenn gleichzeitig eine Steg- und eine Hohlradanbindung getauscht und der Betrag der Standübersetzung im Vergleich zu der Ausführung als Minus-Planetensatz um Eins erhöht wird. Umgekehrt kann auch der zweite Planetensatz 5 als Minus-Planetensatz ausgebildet werden, indem ebenfalls eine Steg- und eine Hohlradanbindung getauscht und der Betrag der Standübersetzung um Eins vermindert wird. Vorliegend sind des Weiteren die Planetensätze 4, 5, 6 und 7 axial betrachtet in der Reihenfolge 4, 5, 6, 7 angeordnet.

Wie des Weiteren aus Fig. 1 ersichtlich ist, umfasst das erfindungsgemäße Mehrstufengetriebe insgesamt sechs Schaltelemente, welche durch drei Bremsen 8, 9 und 10 und drei Kupplungen 11, 12 und 13 gebildet sind. Eine räumliche Anordnung dieser Schaltelemente kann dabei beliebig sein und wird nur durch deren Abmessungen, sowie die äußere Formgebung begrenzt. Vorliegend sind die Bremsen 8, 9 und 10 ebenso wie die Kupplungen 11, 12 und 13 jeweils als Lamellenschaltelemente ausgeführt, wobei erfindungsgemäß aber ebenso gut auch eine Ausführung als Klauenschaltelemente denkbar ist.

Durch gezielte Betätigung der Schaltelemente ist ein selektives Schalten verschiedener Übersetzungsverhältnisse zwischen der Antriebswelle 2 und der Abtriebswelle 3 realisierbar, wobei sich hierbei insgesamt neun Vorwärtsgänge und ein Rückwärtsgang darstellen lassen. Zudem sind in dem Gehäuse 1 insgesamt acht drehbare Wellen aufgenommen, nämlich neben der Antriebswelle 2 und der Abtriebswelle 3 eine dritte Welle 14, eine vierte Welle 15, eine fünfte Welle 16, eine sechste Welle 17, eine siebte Welle 18 und eine achte Welle 19.

Erfindungsgemäß ist bei dem Mehrstufengetriebe nach Fig. 1 ein Steg des ersten Planetensatzes 4 mit der dritten Welle 14 verbunden, welche über die erste Bremse 8 am Gehäuse 1 festgesetzt werden kann. Des Weiteren kann die dritte Welle 14 über die erste Kupplung 11 mit der vierten Welle 15 gekoppelt werden und ist mittels der zweiten Kupplung 12 mit der Antriebswelle 2 verbindbar. Die vierte Welle 15 wiederum ist mit einem Steg des zweiten Planetensatzes 5 gekoppelt und verbindet im weiteren Verlauf ein Sonnenrad des dritten Planetensatzes 6 mit einem Sonnenrad des vierten Planetensatzes 7. Ferner ist ein Hohlrad des dritten Planetensatzes 6 mit der fünften Welle 16 verbunden, die über die zweite Bremse 9 am Gehäuse 1 festgesetzt werden kann.

Wie des Weiteren aus Fig. 1 ersichtlich ist, verbindet die sechste Welle 17 ein Hohlrad des ersten Planetensatzes 4 mit einem Hohlrad des zweiten Planetensatzes 5. Die Antriebswelle 2 ist, neben der möglichen Anbindung an die dritte Welle 14 über die zweite Kupplung 12, mit einem Sonnenrad des zweiten Planetensatzes 5 verbunden und kann des Weiteren über die dritte Kupplung 13 mit der siebten Welle 18 verbunden werden, die mit einem Steg des vierten Planetensatzes 7 gekoppelt ist. Zudem ist ein Sonnenrad des ersten Planetensatzes 4 mit der achten Welle 19 verbunden, welche über die dritte Bremse 10 am Gehäuse 1 festgesetzt werden kann. Schließlich verbindet die Abtriebswelle 3 einen Steg des dritten Planetensatzes 6 mit einem Hohlrad des vierten Planetensatzes 7.

Vorzugsweise sind hierbei die erste Kupplung 11 und die zweite Kupplung 12 axial betrachtet nebeneinander und zwischen dem ersten Planetensatz 4 und dem zweiten Planetensatz 5 angeordnet. Die erste Bremse 8 und die dritte Bremse 10 sind dem ersten Planetensatz 4 in axialer Richtung vorgelagert angeordnet, während die zweite Bremse 9 axial betrachtet auf Höhe des dritten Planetensatzes 6 platziert ist. Die dritte Kupplung 13 ist in axialer Richtung benachbart zu dem vierten Planetensatz 7 angeordnet.

In Fig. 2 ist ein beispielhaftes Schaltschema eines Mehrstufengetriebes gemäß Fig. 1 dargestellt, wobei zum Schalten jedes der insgesamt zehn Gänge jeweils drei der sechs Schaltelemente geschlossen sind und zum Schalten in den jeweils benachbarten Gang der Zustand zweier Schaltelemente variiert wird. Dabei sind dem Schaltschema die jeweiligen Übersetzungen i der einzelnen Gangstufen, sowie die sich ergebenden Gangsprünge ϕ zum jeweils nächsthöheren Gang beispielhaft entnehmbar. Ferner kann die Spreizung des Getriebes mit 8,995 aus Fig. 2 abgelesen werden.

Der erste Vorwärtsgang ergibt sich durch Schließen der zweiten Bremse 9 und der dritten Bremse 10, sowie der ersten Kupplung 11, wohingegen zum Schalten in den nächsthöheren zweiten Vorwärtsgang die dritte Bremse 10 zu öffnen und die zweite Kupplung 12 zu betätigen ist. Der dritte Vorwärtsgang wird geschaltet, indem ausgehend vom zweiten Vorwärtsgang die erste Kupplung 11 geöffnet und die dritte Bremse 10 geschlossen wird. Ein daran anschließender vierter Vorwärtsgang ergibt sich durch Öffnen der dritten Bremse 10 und Schließen der dritten Kupplung 13, während zum Wählen des fünften Vorwärtsganges die zweite Bremse 9 zu öffnen und die dritte Bremse 10 wiederum zu betätigen ist. Der sechste Vorwärtsgang ergibt sich, indem ausgehend vom fünften Vorwärtsgang die dritte Bremse 10 wieder geöffnet und die erste Kupplung 11 geschlossen wird. Der daran anknüpfende siebte Vorwärtsgang wird durch Öffnen der zweiten Kupplung 12 und Betätigen der dritten Bremse 10 geschaltet, während der darauf folgende achte Vorwärtsgang durch erneutes Öffnen der dritten Bremse 10 und Schließen der ersten Bremse 8 gewählt wird. Schließlich ergibt sich der neunte Vorwärtsgang, indem ausgehend vom achten Vorwärtsgang die erste Kupplung 11 geöffnet und die dritte Bremse 10 betätigt wird. Der Rückwärtsgang wird geschaltet, indem alle drei Bremsen 8, 9 und 10 betätigt werden.

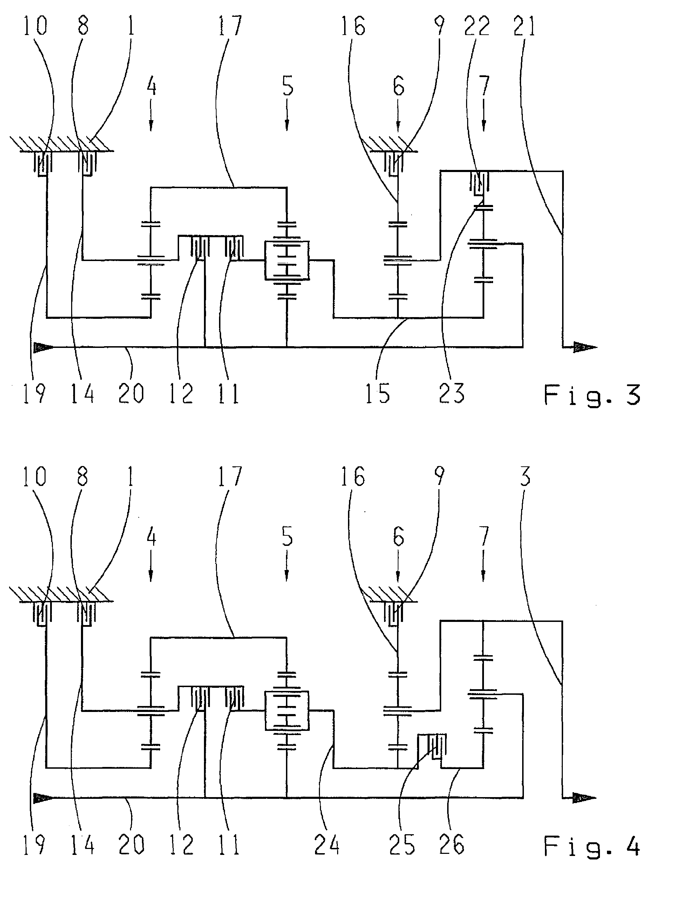

In Fig. 3 ist eine weitere, zweite bevorzugte Ausführungsform eines erfindungsgemäßen Mehrstufengetriebes dargestellt. Im Unterschied zu dem Ausführungsbeispiel gemäß Fig. 1 ist in diesem Fall eine Antriebswelle 20 neben einer Koppelung mit einem Sonnenrad des zweiten Planetensatzes 5 und einer Verbindbarkeit mit der dritten Welle 14 direkt mit einem Steg des vierten Planetensatzes 7 gekoppelt. Des Weiteren kann eine Abtriebswelle 21 über eine dritte Kupplung 22 mit einer siebten Welle 23 verbunden werden, die mit einem Hohlrad des vierten Planetensatzes 7 gekoppelt ist.

Der Aufbau gemäß der zweiten Ausführungsform nach Fig. 3 ist wirkungsgleich zu der ersten Ausführungsform gemäß Fig. 1, so dass in den einzelnen Gängen die Übersetzungen i, sowie die Gangsprünge ϕ gemäß dem beispielhaften Schaltschema aus Fig. 2 erreicht werden. Zudem unterscheidet sich das Schalten der einzelnen Gänge hinsichtlich der Beschreibung zu Fig. 2 nur dahingehend, dass anstelle der dritten Kupplung 13 in Fig. 1 die dritte Kupplung 22 in Fig. 3 jeweils zu betätigen ist.

Aus Fig. 4 geht eine dritte bevorzugte Ausführungsform eines erfindungsgemäßen Mehrstufengetriebes hervor. Dabei ist unterschiedlich zu der Ausführungsform nach Fig. 1, dass eine Antriebswelle 20 erneut direkt mit einem Steg des vierten Planetensatzes 7 verbunden ist. Zudem kann eine vierte Welle 24 über eine dritte Kupplung 25 mit einer siebten Welle 26 gekoppelt werden, die mit einem Sonnenrad des vierten Planetensatzes 7 verbunden ist.

Die Ausführungsform gemäß Fig. 4 ist ebenfalls wirkungsgleich zu der Ausführungsform gemäß Fig. 1, so dass erneut die Übersetzungen i und Gangsprünge ϕ entsprechend dem beispielhaften Schaltschema nach Fig. 2 erreicht werden. Bezüglich einer Schaltung der einzelnen Gänge ist das beispielhafte Schaltschema nach Fig. 2 dahingehend abzuwandeln, dass jeweils anstelle der dritten Kupplung 13 in Fig. 1 die dritte Kupplung 25 in Fig. 2 zu betätigen ist.

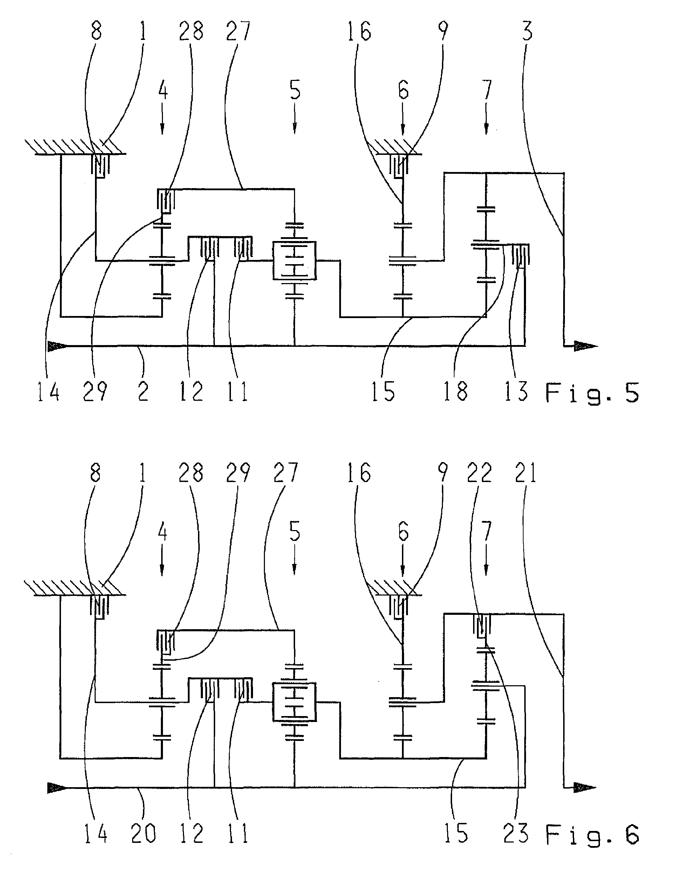

In Fig. 5 ist eine weitere, vierte Ausführungsform eines erfindungsgemäßen Mehrstufengetriebes dargestellt. Diese Ausführungsform unterscheidet sich von der Ausführungsform nach Fig. 1 dahingehend, dass eine sechste Welle 27 neben einer Verbindung mit einem Hohlrad des zweiten Planetensatzes 5 mittels einer vierten Kupplung 28 mit einer achten Welle 29 gekoppelt werden kann, die mit einem Hohlrad des ersten Planetensatzes 4 verbunden ist. Ferner ist ein Sonnenrad des ersten Planetensatzes 4 drehfest mit dem Gehäuse 1 gekoppelt.

Auch im Falle dieser Ausführungsform werden wiederum die Übersetzungen i in den einzelnen Gängen, sowie die Gangsprünge ϕ gemäß dem beispielhaften Schaltschema nach Fig. 2 erreicht. Hinsichtlich der Schaltung der einzelnen Gänge ist das Schaltschema nach Fig. 2 dahingehend abzuwandeln, dass anstelle der dritten Bremse 10 in Fig. 1 die vierte Kupplung 28 jeweils zu betätigen ist.

Des Weiteren geht aus Fig. 6 eine fünfte bevorzugte Ausführungsform eines erfindungsgemäßen Mehrstufengetriebes hervor. Im Unterschied zu der Ausführung nach Fig. 1 ist in diesem Fall eine Antriebswelle 20 direkt mit einem Steg des vierten Planetensatzes 7 verbunden. Zudem kann eine Abtriebswelle 21 neben einer Koppelung mit einem Steg des dritten Planetensatzes 6 mittels einer dritten Kupplung 22 mit einer siebten Welle 23 verbunden werden, die mit einem Hohlrad des vierten Planetensatzes 7 gekoppelt ist. Des Weiteren ist eine sechste Welle 27 mittels einer vierten Kupplung 28 mit einer achten Welle 29 lösbar verbindbar, die mit einem Hohlrad des ersten Planetensatzes 4 gekoppelt ist. Schließlich ist noch ein Sonnenrad des ersten Planetensatzes 4 drehfest mit dem Gehäuse 1 verbunden.

Auch im Falle dieser Ausführungsform ergeben sich in den einzelnen Gängen die Übersetzungen i, sowie die Gangsprünge ϕ gemäß dem beispielhaften Schaltschema nach Fig. 2. Dabei ist dieses Schaltschema nur dahingehend abzuwandeln, dass anstelle der dritten Bremse 10 in Fig. 1 die vierte Kupplung 28 in Fig. 6 und anstelle der dritten Kupplung 13 in Fig. 1 die dritte Kupplung 22 in Fig. 6 jeweils zu betätigen sind.

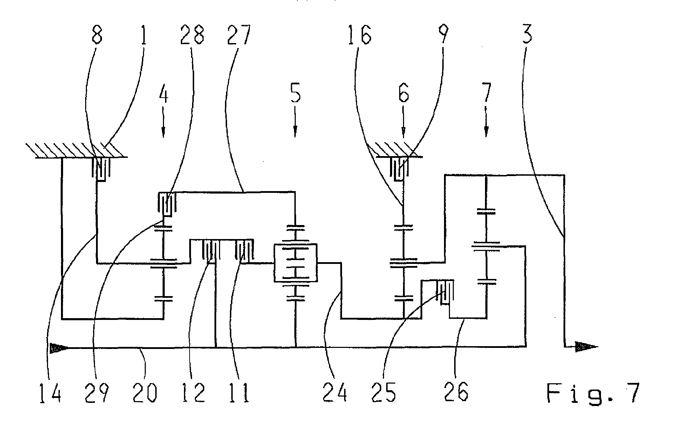

Schließlich geht aus Fig. 7 eine weitere, sechste bevorzugte Ausführungsform eines erfindungsgemäßen Mehrstufengetriebes hervor. Diese unterscheidet sich dabei von der Ausführung gemäß Fig. 1 dahingehend, dass eine Antriebswelle 20 wiederum direkt mit einem Steg des vierten Planetensatzes 7 verbunden ist. Des Weiteren kann eine vierte Welle 24 mittels einer dritten Kupplung 25 mit einer siebten Welle 26 verbunden werden, die mit einem Sonnenrad des vierten Planetensatzes 7 gekoppelt ist. Ferner ist eine sechste Welle 27 neben einer Verbindung mit einem Hohlrad des zweiten Planetensatzes 5 über eine vierte Kupplung 28 mit einer achten Welle 29 koppelbar, die mit einem Hohlrad des ersten Planetensatzes 4 verbunden ist. Schließlich ist noch ein Sonnenrad des ersten Planetensatzes 4 drehfest mit dem Gehäuse 1 gekoppelt.

Die in den einzelnen Gängen erreichbaren Übersetzungen i, sowie die Gangsprünge ϕ entsprechen aufgrund der wirkungsgleichen Ausgestaltung des Getriebes nach Fig. 7 zu der Ausführung nach Fig. 1 den in Fig. 2 dargestellten Werten. Bezüglich einer Schaltung der einzelnen Gänge ist das beispielhafte Schaltschema nach Fig. 2 dahingehend abzuwandeln, dass anstelle der dritten Bremse 10 in Fig. 1 die vierte Kupplung 28 in Fig. 7 und anstelle der dritten Kupplung 13 in Fig. 1 die dritte Kupplung 25 jeweils zu betätigen sind.

Mittels der erfindungsgemäßen Ausgestaltung eines Mehrstufengetriebes lässt sich ein Automatgetriebe mit einem niedrigen Herstellungsaufwand und geringem Gewicht erzielen. Zudem treten bei dem erfindungsgemäßen Mehrstufengetriebe niedrige Absolut- und Relativdrehzahlen, sowie niedrige Planetensatz- und Schaltelementmomente auf. Schließlich wird eine gute Übersetzungsreihe und gute Verzahnungswirkungsgrade erzielt.

Dabei ist das erfindungsgemäße Mehrstufengetriebe bevorzugt für den standardgemäßen Längseinbau geeignet, es ist aber auch eine FrontQuerbauweise denkbar.

Gemäß der Erfindung können sich auch bei gleichen Getriebeschemata je nach Schaltlogik unterschiedliche Gangsprünge ergeben, so dass jeweils eine anwendungs- bzw. fahrzeugspezifische Variation ermöglicht wird.

Erfindungsgemäß ist es zudem möglich, an jeder geeigneten Stelle des jeweiligen Mehrstufengetriebes zusätzliche Freiläufe vorzusehen, beispielsweise zwischen einer Welle und dem Gehäuse, oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 2 bzw. 20 durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Zudem ist es auch möglich, ein derartiges Anfahrelement in Kraftflussrichtung hinter dem Getriebe anzuordnen, wobei in diesem Fall die Antriebswelle 2 bzw. 20 ständig mit der Kurbelwelle des Motors verbunden ist.

Zudem ist es möglich zwischen Motor und Getriebe einen Torsionsschwingungsdämpfer anzuordnen.

Schließlich ist es im Rahmen der Erfindung ebenso denkbar auf jeder der Wellen, bevorzugt auf der Antriebswelle 2 bzw. 20 oder der Abtriebswelle 3 bzw. 21 eine verschleißfreie Bremse, wie beispielsweise einen hydraulischen oder elektrischen Retarder oder dergleichen, anzuordnen, was insbesondere für den Einsatz in Nutzkraftfahrzeugen von besonderer Bedeutung ist. Zusätzlich kann auf jeder der Wellen ein Nebenantrieb zum Betrieb von zusätzlichen Aggregaten vorgesehen sein. Ferner kann auf jeder der Wellen eine elektrische Maschine als Generator und/oder als zusätzliche Antriebsmaschine angebracht sein.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Gehäuse
- 2: Antriebswelle
- 3: Abtriebswelle
- 4: erster Planetensatz
- 5: zweiter Planetensatz
- 6: dritter Planetensatz
- 7: vierter Planetensatz
- 8: erste Bremse
- 9: zweite Bremse
- 10: dritte Bremse
- 11: erste Kupplung
- 12: zweite Kupplung
- 13: dritte Kupplung
- 14: dritte Welle
- 15: vierte Welle
- 16: fünfte Welle
- 17: sechste Welle
- 18: siebte Welle
- 19: achte Welle
- 20: Antriebswelle
- 21: Abtriebswelle
- 22: dritte Kupplung
- 23: siebte Welle
- 24: vierte Welle
- 25: dritte Kupplung
- 26: siebte Welle
- 27: sechste Welle
- 28: vierte Kupplung
- 29: achte Welle

## Patentansprüche

1. Mehrstufengetriebe in Planetenbauweise, insbesondere für ein Kraftfahrzeug, mit einem Gehäuse (1), in welchem acht drehbare Wellen und vier Planetensätze (4, 5, 6, 7) aufgenommen sind, und mindestens sechs Schaltelementen, welche durch Bremsen (8, 9, 10; 8, 9) und Kupplungen (11, 12, 13; 11, 12, 22; 11, 12, 25; 11, 12, 13, 28; 11, 12, 22, 28; 11, 12, 25, 28) gebildet sind und mittels deren gezielter Betätigung verschiedene Übersetzungsverhältnisse zwischen einer Antriebs- (2; 20) und einer Abtriebswelle (3; 21) darstellbar sind, **dadurch gekennzeichnet, dass** ein Steg eines ersten Planetensatzes (4) mit einer dritten Welle (14) verbunden ist, die über eine erste Bremse (8) am Gehäuse (1) festsetzbar ist und des Weiteren zum einen mittels einer ersten Kupplung (11) mit einer vierten Welle (15; 24) lösbar verbindbar ist, welche mit einem Steg eines zweiten Planetensatzes (5) gekoppelt ist, und zum anderen über eine zweite Kupplung (12) mit der Antriebswelle (2; 20) verbindbar ist, wobei ein Hohlrad eines dritten Planetensatzes (6) mit einer fünften Welle (16) gekoppelt ist, welche über eine zweite Bremse (9) am Gehäuse (1) festsetzbar ist, **dadurch gekennzeichnet, dass** die Antriebswelle (2; 20) zudem mit einem Sonnenrad des zweiten Planetensatzes (5) gekoppelt und ein Hohlrad des zweiten Planetensatzes (5) mit einer sechste Welle (17; 27) verbunden ist, und wobei der zweite Planetensatz (5) als Plus-Planetensatz ausgebildet ist.

2. Mehrstufengetriebe nach Anspruch 1, **dadurch gekennzeichnet, dass** die vierte Welle (15) des Weiteren ein Sonnenrad des dritten Planetensatzes (6) mit einem Sonnenrad eines vierten Planetensatzes (7) verbindet, wobei die sechste Welle (17) zudem mit einem Hohlrad des ersten Planetensatzes (4) verbunden und die Antriebswelle (2) ferner über eine dritte Kupplung (13) mit einer siebten Welle (18) koppelbar ist, die mit einem Steg des vierten Planetensatzes (7) verbunden ist, wobei die Abtriebswelle (3) ein Hohlrad des vierten Planetensatzes (7) mit einem Steg des dritten Planetensatzes (6) verbindet, und wobei ein Sonnenrad des ersten Planetensatzes (4) mit einer achten Welle (19) gekoppelt ist, welche mittels einer dritten Bremse (10) am Gehäuse (1) festsetzbar ist.

3. Mehrstufengetriebe nach Anspruch 1, **dadurch gekennzeichnet, dass** die vierte Welle (15) des Weiteren ein Sonnenrad des dritten Planetensatzes (6) mit einem Sonnenrad eines vierten Planetensatzes (7) verbindet, wobei die sechste Welle (17) zudem mit einem Hohlrad des ersten Planetensatzes (4) verbunden und die Antriebswelle (20) ferner mit einem Steg des vierten Planetensatzes (7) gekoppelt ist, wobei die Abtriebswelle (21) mit einem Steg des dritten Planetensatzes (6) wirkverbunden und mittels einer dritten Kupplung (22) mit einer siebten Welle (23) lösbar verbindbar ist, welche mit einem Hohlrad des vierten Planetensatzes (7) gekoppelt ist, und wobei ein Sonnenrad des ersten Planetensatzes (4) mit einer achten Welle (19) gekoppelt ist, welche mittels einer dritten Bremse (10) am Gehäuse (1) festsetzbar ist.

4. Mehrstufengetriebe nach Anspruch 1, **dadurch gekennzeichnet, dass** die vierte Welle (24) des Weiteren mit einem Sonnenrad des dritten Planetensatzes (6) gekoppelt und mittels einer dritten Kupplung (25) mit einer siebten Welle (26) verbindbar ist, die mit einem Sonnenrad eines vierten Planetensatzes (7) verbunden ist, wobei die sechste Welle (17) zudem mit einem Hohlrad des ersten Planetensatzes (4) verbunden und die Antriebswelle (20) ferner mit einem Steg des vierten Planetensatzes (7) gekoppelt ist, dessen Hohlrad über die Abtriebswelle (3) mit einem Steg des dritten Planetensatzes (6) verbunden ist, und wobei ein Sonnenrad des ersten Planetensatzes (4) mit einer achten Welle (19) gekoppelt ist, welche mittels einer dritten Bremse (10) am Gehäuse (1) festsetzbar ist.

5. Mehrstufengetriebe nach einem der Ansprüche 2 bis 4, **dadurch gekennzeichnet, dass** sich ein erster Vorwärtsgang durch Schließen der zweiten (9) und dritten Bremse (10), sowie der ersten Kupplung (11), ein zweiter Vorwärtsgang durch Betätigen der zweiten Bremse (9), sowie der ersten (11) und zweiten Kupplung (12), ein dritter Vorwärtsgang durch Schließen der zweiten (9) und dritten Bremse (10), sowie der zweiten Kupplung (12), ein vierter Vorwärtsgang durch Betätigen der zweiten Bremse (9), sowie der zweiten (12) und dritten Kupplung (13; 22; 25), ein fünfter Vorwärtsgang durch Schließen der dritten Bremse (10), sowie der zweiten (12) und dritten Kupplung (13; 22; 25), ein sechster Vorwärtsgang durch Betätigen sämtlicher Kupplungen (11, 12, 13; 11, 12, 22; 11, 12, 25), ein siebter Vorwärtsgang durch Schließen der dritten Bremse (10), sowie der ersten (11) und dritten Kupplung (13; 22; 25), ein achter Vorwärtsgang durch Betätigen der ersten Bremse (8), sowie der ersten (11) und dritten Kupplung (13; 22; 25), sowie ein neunter Vorwärtsgang durch Schließen der ersten (8) und dritten Bremse (10), sowie der dritten Kupplung (13; 22; 25) ergibt, und wobei sich ein Rückwärtsgang durch Schließen sämtlicher Bremsen (8, 9, 10) ergibt.

6. Mehrstufengetriebe nach Anspruch 1, **dadurch gekennzeichnet, dass** die vierte Welle (15) des Weiteren ein Sonnenrad des dritten Planetensatzes (6) mit einem Sonnenrad eines vierten Planetensatzes (7) verbindet, wobei die Antriebswelle (2) ferner über eine dritte Kupplung (13) mit einer siebten Welle (18) koppelbar ist, die mit einem Steg des vierten Planetensatzes (7) verbunden ist, wobei ein Hohlrad des ersten Planetensatzes (4) mit einer achten Welle (29) gekoppelt ist, die mittels einer vierten Kupplung (28) mit der sechsten Welle (27) verbindbar ist, und wobei die Abtriebswelle (3) ein Hohlrad des vierten Planetensatzes (7) mit einem Steg des dritten Planetensatzes (6) verbindet und ein Sonnenrad des ersten Planetensatzes (4) drehfest mit dem Gehäuse (1) gekoppelt ist.

7. Mehrstufengetriebe nach Anspruch 1, **dadurch gekennzeichnet, dass** die vierte Welle (15) zudem ein Sonnenrad des dritten Planetensatzes (6) mit einem Sonnenrad eines vierten Planetensatzes (7) verbindet, wobei die Abtriebswelle (21) mit einem Steg des dritten Planetensatzes (6) gekoppelt ist und mittels einer dritten Kupplung (22) mit einer siebten Welle (23) lösbar verbindbar ist, die mit einem Hohlrad des vierten Planetensatzes (7) verbunden ist, wobei ein Hohlrad des ersten Planetensatzes (4) mit einer achten Welle (29) gekoppelt ist, welche über ein vierte Kupplung (28) mit der sechsten Welle (27) verbindbar ist, und wobei die Antriebswelle (20) mit einem Steg des vierten Planetensatzes (7) gekoppelt und ein Sonnenrad des ersten Planetensatzes (4) drehfest mit dem Gehäuse (1) verbunden ist.

8. Mehrstufengetriebe nach Anspruch 1, **dadurch gekennzeichnet, dass** die vierte Welle (24) des Weiteren mit einem Sonnenrad des dritten Planetensatzes (6) gekoppelt und mittels einer dritten Kupplung (25) mit einer siebten Welle (26) verbindbar ist, die mit einem Sonnenrad eines vierten Planetensatzes (7) verbunden ist, wobei ein Hohlrad des ersten Planetensatzes (4) mit einer achten Welle (29) gekoppelt ist, welche über eine vierte Kupplung (28) mit der sechsten Welle (27) verbindbar ist, wobei die Abtriebswelle (3) ein Hohlrad des vierten Planetensatzes (7) mit einem Steg des dritten Planetensatzes (6) koppelt, und wobei die Antriebswelle (20) ferner mit einem Steg des vierten Planetensatzes (7) verbunden und ein Sonnenrad des ersten Planetensatzes (4) drehfest mit dem Gehäuse (1) gekoppelt ist.

9. Mehrstufengetriebe nach einem der Ansprüche 6 bis 8, **dadurch gekennzeichnet, dass** sich ein erster Vorwärtsgang durch Schließen der zweiten Bremse (9), sowie der ersten (11) und vierten Kupplung (28), ein zweiter Vorwärtsgang durch Betätigen der zweiten Bremse (9), sowie der ersten (11) und zweiten Kupplung (12), ein dritter Vorwärtsgang durch Schließen der zweiten Bremse (9), sowie der zweiten (12) und vierten Kupplung (28), ein vierter Vorwärtsgang durch Betätigen der zweiten Bremse (9), sowie der zweiten (12) und dritten Kupplung (13; 22; 25), ein fünfter Vorwärtsgang durch Schließen der zweiten (12), dritten (13; 22; 25) und vierten Kupplung (28), ein sechster Vorwärtsgang durch Betätigen der ersten (11), zweiten (12) und dritten Kupplung (13; 22; 25), ein siebter Vorwärtsgang durch Schließen der ersten (11), dritten (13; 22; 25) und vierten Kupplung (28), ein achter Vorwärtsgang durch Betätigen der ersten Bremse (8), sowie der ersten (11) und dritten Kupplung (13; 22; 25), sowie ein neunter Vorwärtsgang durch Schließen der ersten Bremse (8), sowie der dritten (13; 22; 25) und vierten Kupplung (28) ergibt, und wobei sich ein Rückwärtsgang durch Schließen sämtlicher Bremsen (8, 9) und der vierten Kupplung (28) ergibt.

10. Mehrstufengetriebe nach einem der vorhergehenden Ansprüche, **dadurch gekennzeichnet, dass** die Schaltelemente als Lamellenschaltelemente oder als Klauenschaltelemente ausgebildet sind.

## Claims

1. Multistep gear mechanism of planetary design, in particular for a motor vehicle, having a housing (1), in which eight rotatable shafts and four planetary sets (4, 5, 6, 7) are received, and at least six shifting elements which are formed by brakes (8, 9, 10; 8, 9) and clutches (11, 12, 13; 11, 12, 22; 11, 12, 25; 11, 12, 13, 28; 11, 12, 22, 28; 11, 12, 25, 28) and by means of the targeted actuation of which different transmission ratios can be produced between a drive shaft (2; 20) and an output shaft (3; 21), **characterized in that** a spider of a first planetary set (4) is connected to a third shaft (14) which can be fixed via a first brake (8) on the housing (1) and, furthermore, firstly can be connected releasably by means of a first clutch (11) to a fourth shaft (15; 24) which is coupled to a spider of a second planetary set (5), and secondly can be connected via a second clutch (12) to the drive shaft (2; 20), a hollow gear of a third planetary set (6) being coupled to a fifth shaft (16) which can be fixed via a second brake (9) on the housing (1), **characterized in that**, in addition, the drive shaft (2; 20) is coupled to a sun gear of the second planetary set (5), and an internal gear of the second planetary set (5) is connected to a sixth shaft (17; 27), and the second planetary set (5) being configured as a positive planetary set.

2. Multistep gear mechanism according to Claim 1, **characterized in that**, furthermore, the fourth shaft (15) connects a sun gear of the third planetary set (6) to a sun gear of a fourth planetary set (7), the sixth shaft (17) being connected in addition to an internal gear of the first planetary set (4), and, furthermore, it being possible for the drive shaft (2) to be coupled via a third clutch (13) to a seventh shaft (18) which is connected to a spider of the fourth planetary set (7), the output shaft (3) connecting an internal gear of the fourth planetary set (7) to a spider of the third planetary set (6), and a sun gear of the first planetary set (4) being coupled to an eighth shaft (19) which can be fixed by means of a third brake (10) on the housing (1).

3. Multistep gear mechanism according to Claim 1, **characterized in that**, furthermore, the fourth shaft (15) connects a sun gear of the third planetary set (6) to a sun gear of a fourth planetary set (7), the sixth shaft (17) being connected in addition to an internal gear of the first planetary set (4), and, furthermore, the drive shaft (20) being coupled to a spider of the fourth planetary set (7), the output shaft (21) being operatively connected to a spider of the third planetary set (6) and being capable of being connected releasably by means of a third clutch (22) to a seventh shaft (23) which is coupled to an internal gear of the fourth planetary set (7), and a sun gear of the first planetary set (4) being coupled to an eighth shaft (19) which can be fixed by means of a third brake (10) on the housing (1).

4. Multistep gear mechanism according to Claim 1, **characterized in that**, furthermore, the fourth shaft (24) is coupled to a sun gear of the third planetary set (6) and can be connected by means of a third clutch (25) to a seventh shaft (26) which is connected to a sun gear of a fourth planetary set (7), the sixth shaft (17) being connected in addition to an internal gear of the first planetary set (4), and, furthermore, the drive shaft (20) being coupled to a spider of the fourth planetary set (7), the internal gear of which is connected via the output shaft (3) to a spider of the third planetary set (6), and a sun gear of the first planetary set (4) being coupled to an eighth shaft (19) which can be fixed by means of a third brake (10) on the housing (1).

5. Multistep gear mechanism according to one of Claims 2 to 4, **characterized in that** a first forward gear results from closure of the second (9) and third brake (10) and of the first clutch (11), a second forward gear results from actuation of the second brake (9) and of the first (11) and second clutch (12), a third forward gear results from closure of the second (9) and third brake (10) and of the second clutch (12), a fourth forward gear results from actuation of the second brake (9) and of the second (12) and third clutch (13; 22; 25), a fifth forward gear results from closure of the third brake (10) and of the second (12) and third clutch (13; 22; 25), a sixth forward gear results from actuation of all the clutches (11, 12, 13; 11, 12, 22; 11, 12, 25), a seventh forward gear results from closure of the third brake (10) and of the first (11) and third clutch (13; 22; 25), an eighth forward gear results from actuation of the first brake (8) and of the first (11) and third clutch (13; 22; 25), and a ninth forward gear results from closure of the first (8) and third brake (10) and of the third clutch (13; 22; 25), and a reverse gear resulting from closure of all the brakes (8, 9, 10).

6. Multistep gear mechanism according to Claim 1, **characterized in that**, furthermore, the fourth shaft (15) connects a sun gear of the third planetary set (6) to a sun gear of a fourth planetary set (7), it being possible, furthermore, to couple the drive shaft (2) via a third clutch (13) to a seventh shaft (18) which is connected to a spider of the fourth planetary set (7), an internal gear of the first planetary set (4) being coupled to an eighth shaft (29) which can be connected by means of a fourth clutch (28) to the sixth shaft (27), and the output shaft (3) connecting an internal gear of the fourth planetary set (7) to a spider of the third planetary set (6), and a sun gear of the first planetary set (4) being coupled fixedly to the housing (1) so as to rotate with it.

7. Multistep gear mechanism according to Claim 1, **characterized in that**, in addition, the fourth shaft (15) connects a sun gear of the third planetary set (6) to a sun gear of a fourth planetary set (7), the output shaft (21) being coupled to a spider of the third planetary set (6) and being capable of being connected releasably by means of a third clutch (22) to a seventh shaft (23) which is connected to an internal gear of the fourth planetary set (7), an internal gear of the first planetary set (4) being coupled to an eighth shaft (29) which can be connected via a fourth clutch (28) to the sixth shaft (27), and the drive shaft (20) being coupled to a spider of the fourth planetary set (7), and a sun gear of the first planetary set (4) being connected fixedly to the housing (1) so as to rotate with it.

8. Multistep gear mechanism according to Claim 1, **characterized in that**, furthermore, the fourth shaft (24) is coupled to a sun gear of the third planetary set (6) and can be connected by means of a third clutch (25) to a seventh shaft (26) which is connected to a sun gear of a fourth planetary set (7), an internal gear of the first planetary set (4) being coupled to an eighth shaft (29) which can be connected via a fourth clutch (28) to the sixth shaft (27), the output shaft (3) coupling an internal gear of the fourth planetary set (7) to a spider of the third planetary set (6), and, furthermore, the drive shaft (20) being connected to a spider of the fourth planetary set (7), and a sun gear of the first planetary set (4) being coupled fixedly to the housing (1) so as to rotate with it.

9. Multistep gear mechanism according to one of Claims 6 to 8, **characterized in that** a first forward gear results from closure of the second brake (9) and of the first (11) and fourth clutch (28), a second forward gear results from actuation of the second brake (9) and of the first (11) and second clutch (12), a third forward gear results from closure of the second brake (9) and of the second (12) and fourth clutch (28), a fourth forward gear results from actuation of the second brake (9) and of the second (12) and third clutch (13; 22; 25), a fifth forward gear results from closure of the second (12), third (13; 22; 25) and fourth clutch (28), a sixth forward gear results from actuation of the first (11), second (12) and third clutch (13; 22; 25), a seventh forward gear results from closure of the first (11), third (13; 22; 25) and fourth clutch (28), an eighth forward gear results from actuation of the first brake (8) and of the first (11) and third clutch (13; 22; 25), and a ninth forward gear results from closure of the first brake (8) and of the third (13; 22; 25) and fourth clutch (28), and a reverse gear resulting from closure of all the brakes (8, 9) and of the fourth clutch (28).

10. Multistep gear mechanism according to one of the preceding claims, **characterized in that** the shifting elements are configured as plate-type shifting elements or as claw-type shifting elements.

## Revendications

1. Boîte de vitesses multiétagée de construction planétaire, en particulier pour un véhicule automobile, comprenant un boîtier (1) dans lequel sont reçus huit arbres rotatifs et quatre trains planétaires (4, 5, 6, 7), et au moins six éléments de commutation, lesquels sont formés par des freins (8, 9, 10 ; 8, 9) et des embrayages (11, 12, 13 ; 11, 12, 22 ; 11, 12, 25 ; 11, 12, 13, 28 ; 11, 12, 22, 28 ; 11, 12, 25, 28) et par l'actionnement ciblé desquels différents rapports de transmission entre un arbre d'entraînement (2 ; 20) et un arbre de sortie (3 ; 21) peuvent être réalisés, **caractérisée en ce qu'**un porte-satellites d'un premier train planétaire (4) est relié à un troisième arbre (14) qui peut être fixé sur le boîtier (1) par le biais d'un premier frein (8) et qui, d'une part, peut de plus être relié de manière amovible à un quatrième arbre (15 ; 24) au moyen d'un premier embrayage (11), lequel quatrième arbre est accouplé à un porte-satellites d'un deuxième train planétaire (5), et qui, d'autre part, peut être relié à l'arbre d'entraînement (2 ; 20) par le biais d'un deuxième embrayage (12), une couronne dentée d'un troisième train planétaire (6) étant accouplée à un cinquième arbre (16), lequel peut être fixé sur le boîtier (1) par le biais d'un deuxième frein (9), **caractérisée en ce que** l'arbre d'entraînement (2 ; 20) est en outre accouplé à une roue solaire du deuxième train planétaire (5) et une couronne dentée du deuxième train planétaire (5) est reliée à un sixième arbre (17 ; 27), et le deuxième train planétaire (5) étant réalisé sous forme de train planétaire positif.

2. Boîte de vitesses multiétagée selon la revendication 1, **caractérisée en ce que** le quatrième arbre (15) relie de plus une roue solaire du troisième train planétaire (6) à une roue solaire d'un quatrième train planétaire (7), le sixième arbre (17) étant en outre relié à une couronne dentée du premier train planétaire (4) et l'arbre d'entraînement (2) pouvant de plus être accouplé à un septième arbre (18) par le biais d'un troisième embrayage (13), lequel septième arbre est relié à un porte-satellites du quatrième train planétaire (7), l'arbre de sortie (3) reliant une couronne dentée du quatrième train planétaire (7) à un porte-satellites du troisième train planétaire (6), et une roue solaire du premier train planétaire (4) étant accouplée à un huitième arbre (19), lequel peut être fixé sur le boîtier (1) au moyen d'un troisième frein (10).

3. Boîte de vitesses multiétagée selon la revendication 1, **caractérisée en ce que** le quatrième arbre (15) relie de plus une roue solaire du troisième train planétaire (6) à une roue solaire d'un quatrième train planétaire (7), le sixième arbre (17) étant en outre relié à une couronne dentée du premier train planétaire (4) et l'arbre d'entraînement (20) étant de plus accouplé à un porte-satellites du quatrième train planétaire (7), l'arbre de sortie (21) étant en liaison fonctionnelle avec un porte-satellites du troisième train planétaire (6) et pouvant être relié de manière amovible à un septième arbre (23) au moyen d'un troisième embrayage (22), lequel septième arbre est accouplé à une couronne dentée du quatrième train planétaire (7), et une roue solaire du premier train planétaire (4) étant accouplée à un huitième arbre (19), lequel peut être fixé sur le boîtier (1) au moyen d'un troisième frein (10).

4. Boîte de vitesses multiétagée selon la revendication 1, **caractérisée en ce que** le quatrième arbre (24) est de plus accouplé à une roue solaire du troisième train planétaire (6) et peut être relié à un sixième arbre (26) au moyen d'un troisième embrayage (25), lequel septième arbre est relié à une roue solaire d'un quatrième train planétaire (7), le sixième arbre (17) étant en outre relié à une couronne dentée du premier train planétaire (4) et l'arbre d'entraînement (20) étant de plus accouplé à un porte-satellites du quatrième train planétaire (7), dont la couronne dentée est reliée à un porte-satellites du troisième train planétaire (6) par le biais de l'arbre de sortie (3), et une roue solaire du premier train planétaire (4) étant accouplée à un huitième arbre (19), lequel peut être fixé sur le boîtier (1) au moyen d'un troisième frein (10).

5. Boîte de vitesses multiétagée selon l'une quelconque des revendications 2 à 4, **caractérisée en ce qu'**un premier rapport de marche avant s'obtient par fermeture du deuxième (9) et du troisième frein (10), ainsi que du premier embrayage (11), un deuxième rapport de marche avant s'obtient par actionnement du deuxième frein (9), ainsi que du premier (11) et du deuxième embrayage (12), un troisième rapport de marche avant s'obtient par fermeture du deuxième (9) et du troisième frein (10), ainsi que du deuxième embrayage (12), un quatrième rapport de marche avant s'obtient par actionnement du deuxième frein (9), ainsi que du deuxième (12) et du troisième embrayage (13 ; 22 ; 25), un cinquième rapport de marche avant s'obtient par fermeture du troisième frein (10), ainsi que du deuxième (12) et du troisième embrayage (13 ; 22 ; 25), un sixième rapport de marche avant s'obtient par actionnement de tous les embrayages (11, 12, 13 ; 11, 12, 22 ; 11, 12, 25), un septième rapport de marche avant s'obtient par fermeture du troisième frein (10), ainsi que du premier (11) et du troisième embrayage (13 ; 22 ; 25), un huitième rapport de marche avant s'obtient par actionnement du premier frein (8), ainsi que du premier (11) et du troisième embrayage (13 ; 22 ; 25), et un neuvième rapport de marche avant s'obtient par fermeture du premier (8) et du troisième frein (10), ainsi que du troisième embrayage (13 ; 22 ; 25), et un rapport de marche arrière s'obtenant par fermeture de tous les freins (8, 9, 10).

6. Boîte de vitesses multiétagée selon la revendication 1, **caractérisée en ce que** le quatrième arbre (15) relie en outre une roue solaire du troisième train planétaire (6) à une roue solaire d'un quatrième train planétaire (7), l'arbre d'entraînement (2) pouvant en outre être accouplé à un septième arbre (18) par le biais d'un troisième embrayage (13), lequel septième arbre est relié à un porte-satellites du quatrième train planétaire (7), une couronne dentée du premier train planétaire (4) étant accouplée à un huitième arbre (29) qui peut être relié au sixième arbre (27) au moyen d'un quatrième embrayage (28), et l'arbre de sortie (3) reliant une couronne dentée du quatrième train planétaire (7) à un porte-satellites du troisième train planétaire (6) et une roue solaire du premier train planétaire (4) étant accouplée de manière solidaire en rotation au boîtier (1).

7. Boîte de vitesses multiétagée selon la revendication 1, **caractérisée en ce que** le quatrième arbre (15) relie en outre une roue solaire du troisième train planétaire (6) à une roue solaire d'un quatrième train planétaire (7), l'arbre de sortie (21) étant accouplé à un porte-satellites du troisième train planétaire (6) et pouvant être relié de manière amovible à un septième arbre (23) au moyen d'un troisième embrayage (22), lequel septième arbre est relié à une couronne dentée du quatrième train planétaire (7), une couronne dentée du premier train planétaire (4) étant accouplée à un huitième arbre (29), lequel peut être relié au sixième arbre (27) par le biais d'un quatrième embrayage (28), et l'arbre d'entraînement (20) étant accouplé à un porte-satellites du quatrième train planétaire (7) et une roue solaire du premier train planétaire (4) étant reliée de manière solidaire en rotation au boîtier (1).

8. Boîte de vitesses multiétagée selon la revendication 1, **caractérisée en ce que** le quatrième arbre (24) est de plus accouplé à une roue solaire du troisième train planétaire (6) et peut être relié à un septième arbre (26) au moyen d'un troisième embrayage (25), lequel septième arbre est relié à une roue solaire d'un quatrième train planétaire (7), une couronne dentée du premier train planétaire (4) étant accouplée à un huitième arbre (29), lequel peut être relié au sixième arbre (27) par le biais d'un quatrième embrayage (28), l'arbre de sortie (3) accouplant une couronne dentée du quatrième train planétaire (7) à un porte-satellites du troisième train planétaire (6), et l'arbre d'entraînement (20) étant en outre relié à un porte-satellites du quatrième train planétaire (7) et une roue solaire du premier train planétaire (4) étant accouplée de manière solidaire en rotation au boîtier (1).

9. Boîte de vitesses multiétagée selon l'une quelconque des revendications 6 à 8, **caractérisée en ce qu'**un premier rapport de marche avant s'obtient par fermeture du deuxième frein (9), ainsi que du premier (11) et du quatrième embrayage (28), un deuxième rapport de marche avant s'obtient par actionnement du deuxième frein (9), ainsi que du premier (11) et du deuxième embrayage (12), un troisième rapport de marche avant s'obtient par fermeture du deuxième frein (9), ainsi que du deuxième (12) et du quatrième embrayage (28), un quatrième rapport de marche avant s'obtient par actionnement du deuxième frein (9), ainsi que du deuxième (12) et du troisième embrayage (13 ; 22 ; 25), un cinquième rapport de marche avant s'obtient par fermeture du deuxième (12), du troisième (13 ; 22 ; 25) et du quatrième embrayage (28), un sixième rapport de marche avant s'obtient par actionnement du premier (11), du deuxième (12) et du troisième embrayage (13 ; 22 ; 25), un septième rapport de marche avant s'obtient par fermeture du premier (11), du troisième (13 ; 22 ; 25) et du quatrième embrayage (28), un huitième rapport de marche avant s'obtient par actionnement du premier frein (8), ainsi que du premier (11) et du troisième embrayage (13 ; 22 ; 25), et un neuvième rapport de marche avant s'obtient par fermeture du premier frein (8), ainsi que du troisième (13 ; 22 ; 25) et du quatrième embrayage (28), et un rapport de marche arrière s'obtenant par fermeture de tous les freins (8, 9) et du quatrième embrayage (28).

10. Boîte de vitesses multiétagée selon l'une quelconque des revendications précédentes, **caractérisée en ce que** les éléments de commutation sont réalisés sous forme d'éléments de commutation à disques ou d'éléments de commutation à griffes.
